**Europäisches Patentamt**

**European Patent Office**

**Office européen des brevets**

(19)

(11) Veröffentlichungsnummer : **0 592 361 A1**

# (12) EUROPÄISCHE PATENTANMELDUNG

(21) Anmeldenummer : **93810678.8**

(22) Anmeldetag : **24.09.93**

(51) Int. Cl.$^5$ : **G01J 5/60**

(30) Priorität : **06.10.92 CH 3115/92**

(43) Veröffentlichungstag der Anmeldung :
**13.04.94 Patentblatt 94/15**

(84) Benannte Vertragsstaaten :
**BE CH DE DK ES FR GB IT LI NL SE**

(71) Anmelder : **ALUSUISSE-LONZA SERVICES AG**
**CH-8034 Zürich (CH)**

(72) Erfinder : **Buchheit, Karl-Heinz**
**Seyweilerstrasse 5**
**D-66440 Blieskastel (DE)**
Erfinder : **Henrichen, Markus**
**In den tiefen Wiesen**
**D-56170 Bendorf (DE)**
Erfinder : **Pandit, Madhukar**
**Casimirring 108**
**D-67663 Kaiserslautern (DE)**

(54) **Temperaturmessung mit Zweiwellenlängenpyrometern.**

(57) Vorliegendes Verfahren beschreibt die präzise Temperaturmessung mit Zweiwellenlängenpyrometern an Körpern, bei denen die Umgebungsstrahlung gegenüber der Infrarotstrahlung des Messgutes vernachlässigbar ist. Das Verfahren ist besonders geeignet für die pyrometrische Temperaturmessung an Materialien mit veränderlichen Oberflächencharakteristiken und mit sehr tiefem und insbesondere wellenlängenabhängigem Emissionsgrad. Dabei wird die Oberflächentemperatur des Messgutes mit einem Zweiwellenlängenpyrometer erfasst und durch eine Korrelationsanalyse der Funktionszusammenhang zwischen den beiden Emissionsgraden ermittelt, wobei die Parameter des Funktionszusammenhangs durch Referenz-Temperaturmessungen bestimmt werden. Die Temperaturbestimmung des Messgutes erfolgt dann durch die Lösung eines nichtlinearen Gleichungssystems, enthaltend den Funktionszusammenhang zwischen den beiden Emissionsgraden und die für beide Messwellenlängen gültigen Planck'schen Gleichungen für reale Strahler.

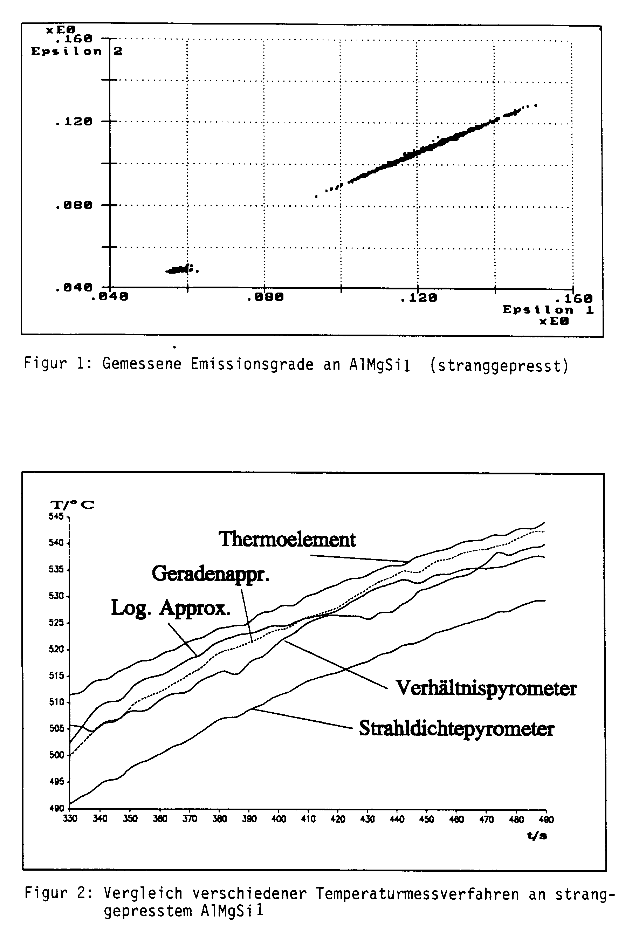

Figur 2: Vergleich verschiedener Temperaturmessverfahren an stranggepresstem AlMgSi1

EP 0 592 361 A1

Vorliegende Erfindung betrifft ein Verfahren für die Temperaturmessung mit Zweiwellenlängenpyrometern von Messgütern mit kleinem, insbesondere wellenlängenabhängigem Emissionsgrad ($\varepsilon$ < 0,1) und veränderlichen Oberflächencharakteristiken sowie eine Störgrössenkorrektur der Temperaturmessung.

Die pyrometrische Temperaturmessung geschieht unter Ausnutzung der Planck'schen Strahlungsgesetze, die jedoch nur für ideale schwarze Körper gelten. Kennt man die Gesamtenergie der ausgesandten Strahlung, so kann aus der Messung der Energie eines gewissen Spektralbereichs unter Zuhilfenahme der Planck'schen Strahlungsgesetze die Temperatur berechnet werden, die der Körper hätte, wenn er ein schwarzer Körper wäre. Da die meisten Körper nicht ideal schwarz sind, ist die wahre Temperatur höher als die auf diese Weise errechnete.

Um die Temperatur eines realen Körpers zu bestimmen, muss die Emissivität, d.h. das Strahlungsvermögen des betrachteten Körpers, bekannt sein. Die Emissivität eines opaken Körpers wird durch den Quotienten der emittierten Strahlung des Körpers und der Strahlung eines schwarzen Körpers mit derselben Temperatur definiert. Die Emissivität kann physikalisch durch einen auf die Planck'schen Strahlungsgesetze multiplikativ wirkenden Emissionsgrad $\varepsilon$ beschrieben werden. Ein idealer schwarzer Strahler hat den Emissionsgrad $\varepsilon$ gleich 1. Die gemessene spektrale Strahldichte, d.h. die vom Körper abgestrahlte Energiedichte, bezogen auf die Breite $d_\lambda$ des betrachteten Wellenlängenintervalls, geschrieben als Energie pro Flächen-, Wellenlängen-, Raumwinkel- und Zeiteinheit, kann durch folgende Gleichung beschrieben werden:

$$(1) \qquad L_{\lambda M} = \varepsilon * L_{\lambda K} + (1 - \varepsilon) * L_{\lambda U}$$

wobei $L_{\lambda K}$ die Körperstrahlung und $L_{\lambda U}$ die Umgebungsstrahlung bezeichnen. Die spektrale Strahldichte ist somit stark vom Emissionsgrad $\varepsilon$ abhängig.

An den meisten Spektral- oder Einwellenlängenpyrometern ist die Emissivität einstellbar, um die Temperaturmessung mittels üblicher Temperaturmessgeräte wie beispielsweise Thermometern, Thermoelementen oder Halbleiterdioden derart zu eichen, dass unter der Annahme eines konstanten, materialspezifischen Emissionsgrades und unter Vernachlässigung der während dem Messvorgang möglicherweise eintretenden Veränderungen, wie beispielsweise der Oberflächenbeschaffenheit, Legierungszusammensetzung, Wellenlängenverschiebung des Strahlungsmaximums oder schlicht der Temperaturabhängigkeit des Emissionsgrades, eine Temperaturmessung ermöglicht wird.

Die oben beschriebenen Einschränkungen bezüglich der Empfindlichkeit gegenüber der Oberflächenbeschaffenheit des Messgutes können durch das Messen der Strahlungsintensität bei zwei verschiedenen Wellenlängen und anschliessender Quotientenbildung der Messwerte vermindert werden. Die zu solchen Messverfahren verwendeten Geräte werden gemäss ihres Funktionsprinzips als Zweiwellenlängen-, Zweifarb- oder Quotientenpyrometer bezeichnet.

Verschiedene Materialien, wie Metalle und dabei beispielsweise Aluminium, Kupfer oder Gold besitzen neben einem sehr kleinen Emissionsgrad $\varepsilon$, der die Empfindlichkeit gegenüber Oberflächenkontaminationen entsprechend erhöht, die für eine berührungslose Temperaturmessung weiter erschwerende Eigenschaft der Abhängigkeit des Emissionsgrades von der Wellenlänge.

Um den Einfluss dieser weiteren Erschwernis für eine pyrometrische Temperaturmessung zu mindern, wird in der US-Patentschrift 4,659,234 ein Zweiwellenlängenpyrometer beschrieben, das die Messwerte eines Einfarb- oder Einwellenlängenpyrometers und diejenigen eines Quotientenpyrometers geeignet verknüpft.

Die in der US-Patentschrift 4,561,786 beschriebene Messeinrichtung benützt zusätzlich zum Quotientenpyrometer noch einen Referenzstrahler.

Die in den beiden oben erwähnten US-Patentschriften beschriebenen MessSysteme sind jedoch immer noch wellenlängenabhängig, und der Einfluss der Oberflächencharakteristik bleibt teilweise weiterhin bestehen, so dass die Genauigkeit der Temperaturmessung noch nicht den hohen Anforderungen genügt wie sie beispielsweise bei der Verarbeitung von Aluminium oder Buntmetallen gefordert werden.

In der US-Patentschrift 4,465,382 wird eine Messeinrichtung sowie ein Verfahren zur Messung der Infrarotstrahlung und zur Bestimmung der Oberflächentemperatur und Emissivität von Körpern, deren Temperatur nahe der Umgebungstemperatur liegt, beschrieben. Die dieser Erfindung zugrunde liegende Aufgabe entspricht beispielsweise der pyrometrischen Temperaturbestimmung eines Messobjektes in einem Ofen, bei der die Wärmestrahlung des zu messenden Körpers etwa der Wärmestrahlung der Umgebung entspricht.

Vorliegende Erfindung beschreibt ein Verfahren für die pyrometrische Temperaturmessung von Körpern, bei denen die Umgebungsstrahlung keinen wesentlichen Einfluss auf die Temperaturbestimmung ausübt.

Die US-Patentschrift 4,408,903 beschreibt eine Methode zur pyrometrischen Temperaturmessung von hochreflektierenden, bewegten Körpern wie beispielsweise von Pressgut vor dem eigentlichen Strang- oder Fliesspressen. Dabei wird das vorgewärmte Pressgut partiell mit einer Russschicht eingeschwärzt und die vom Pressgut an den eingerussten Flächen emittierte Infrarotstrahlung gemessen.

Dieses Verfahren bedingt das relativ aufwendige Einfärben des Messobjektes mit Russ und dessen komplette Entfernung nach der Messung und vor der Weiterverarbeitung des Messobjektes. Die Methode beruht somit auf der Temperaturmessung eines schwarzen Strahlers und bildet nicht Gegenstand der vorliegenden erfinderischen Tätigkeit.

Aufgabe vorliegender Erfindung ist es, ein Verfahren zu schaffen, das eine hochpräzise pyrometrische Temperaturbestimmung an Körpern erlaubt, deren Infrarotstrahlungs-Intensität viel höher als die der Umgebung ist, und das insbesondere geeignet ist, Messungen an Materialien mit sehr tiefem Emissionsgrad (beispielsweise $\varepsilon < 0,1$) und/oder einem wellenlängenabhängigen Emissionsgrad durchzuführen, und das eine Verminderung des Einflusses der veränderlichen Emissionsgrade bei der pyrometrischen Temperaturmessung mit Zweiwellenlängenpyrometern ermöglicht.

Erfindungsgemäss wird dies dadurch erreicht, dass die Temperatur des Körpers $T_K$ durch die spektrale Strahldichte bei den Wellenlängen $\lambda_1$ und $\lambda_2$ mittels eines Zweiwellenlängenpyrometers erfasst wird und durch eine Korrelationsanalyse der Funktionszusammenhang

$$\varepsilon_1 = f(\varepsilon_2) \text{ bzw. } \varepsilon_2 = f(\varepsilon_1) \quad (2)$$

ermittelt wird, und die Temperatur des Körpers $T_K$ durch die Lösung des folgenden nichtlinearen Gleichungssystems, bestehend aus drei Gleichungen und drei Unbekannten, enthaltend den Funktionszusammenhang zwischen den Emissionsgraden $\varepsilon_1$ und $\varepsilon_2$ und die für beide Messwellenlängen gültigen Planck'schen Gleichungen für reale Strahlen, bestimmt wird,

$$L_{\lambda 1} = \frac{\varepsilon_1 * C_1}{\pi * \lambda_1^5 * \left[ e^{\frac{C_2}{\lambda_1 * T_K}} - 1 \right]} \quad (3)$$

$$L_{\lambda 2} = \frac{\varepsilon_2 * C_1}{\pi * \lambda_2^5 * \left[ e^{\frac{C_2}{\lambda_2 * T_K}} - 1 \right]} \quad (4)$$

$$\varepsilon_1 = f(\varepsilon_2) \quad (5)$$

wobei im Gleichungssystem die spektralen Strahldichten $L_{\lambda 1}$ bzw. $L_{\lambda 2}$ die gemessenen physikalischen Grössen, $\lambda_1$ bzw. $\lambda_2$ die bekannten Messwellenlängen und $\varepsilon_1$ bzw. $\varepsilon_2$ die unbekannten Emissionsgrade sind, und die Konstanten $C_1$, $C_2$ und $\pi$ bekannte physikalische Grössen darstellen.

Für kleine Wellenlängen, d.h. für $C_2/(\lambda * T_K) \gg 1$, wird der Exponent der e-Funktion in den Gleichungen (3) und (4) gross. Dann gilt für die Ausdrücke (3) und (4) in guter Näherung:

3

$$L_{\lambda_1} = \frac{\varepsilon_1 \, * \, C_1}{\pi * \lambda_1{}^5 * \, e^{\frac{C_2}{\lambda_1 * T_K}}} \quad . \tag{6}$$

$$L_{\lambda_2} = \frac{\varepsilon_2 \, * \, C_1}{\pi * \lambda_2{}^5 * \, e^{\frac{C_2}{\lambda_2 * T_K}}} \tag{7}$$

Werden die Wellenlängen der Infrarotstrahlung, die sich typischerweise im Bereich von 1 bis 100 μm bewegen, als klein betrachtet, so können die Gleichungen (3) und (4) durch die Approximationen (6) und (7) ersetzt werden, was die Auflösung des nichtlinearen Gleichungssystems stark vereinfacht.

Im Rahmen der erfinderischen Tätigkeit wurde insbesondere gefunden, dass die Emissionsfaktoren $\varepsilon_1$ und $\varepsilon_2$ der Wellenlängen $\lambda_1$ und $\lambda_2$ nicht unabhängig voneinander veränderlich sind.

In beispielhafter Weise wird dieser Zusammenhang durch Figur 1 verdeutlicht. Die beispielhaft dargestellte Grafik zeigt die gemessenen Emissionsgrade $\varepsilon_1$ und $\varepsilon_2$ einer Stichprobe von Vergleichsmessungen an Profilen der Legierung AlMgSi1 beim Strangpressen. Die Abszisse der Figur 1 beschreibt die Werte der Emissionsgrade von $\varepsilon_1$, während die Werte von $\varepsilon_2$ auf der Ordinate aufgetragen sind. Wie aus der Grafik ersichtlich ist, bewegen sich die Werte der gemessenen Emissionsgrade im Bereich zwischen 0,04 und 0,16 und verdeutlichen demgemäss die sehr kleine Emissivität der AlMgSi1-Legierung.

Der Funktionszusammenhang gemäss Gleichung (2) wird bevorzugt durch eine Korrelationsanalyse ermittelt, wobei beispielsweise folgende Ansätze zur Anwendung kommen:

$$(8) \quad \varepsilon_1 = a \, * \, \varepsilon_2 \quad . \qquad\qquad (12) \quad \varepsilon_2 = a \, * \, \varepsilon_1$$

$$(9) \quad \varepsilon_1 = a \, * \, \varepsilon_2 + b \qquad\qquad (13) \quad \varepsilon_2 = a \, * \, \varepsilon_1 + b$$

$$(10) \quad \varepsilon_1 = a \, * \, \varepsilon_2{}^2 + b \, * \, \varepsilon_2 + c \qquad (14) \quad \varepsilon_2 = a \, * \, \varepsilon_1{}^2 + b \, * \, \varepsilon_1 + c$$

$$(11) \quad \ln(\varepsilon_1) = a \, * \, \ln(\varepsilon_2) + b \qquad (15) \quad \ln(\varepsilon_2) = a \, * \, \ln(\varepsilon_1) + b$$

Die Gleichungen (8) und (9) bzw. (12) und (13) stellen lineare Funktionsansätze für $\varepsilon_1$ bzw. $\varepsilon_2$ dar, während in den Gleichungen (10) bzw. (14) quadratische Ausdrücke für $\varepsilon_1$ bzw. $\varepsilon_2$ aufgeführt sind. Die weiteren Ansätze (11) bzw. (15) beschreiben einen logarithmischen Zusammenhang der Emissionsgrade $\varepsilon_1$ und $\varepsilon_2$.

Die Parameter des Funktionszusammenhangs zwischen den Emissionsgraden $\varepsilon_1$ und $\varepsilon_2$ werden zweckmässig durch ein Fehlerminimierungsverfahren von Referenz-Temperaturmessungen ermittelt, wobei die Temperaturmessung mit einem geeichten Messgerät, wie beispielsweise durch Kontaktmessung mit einem Thermometer, Thermoelement oder einer Halbleiterdiode, durchgeführt wird.

Als Fehlerminimierungsverfahren eignen sich z.B. besonders die bekannten Methoden, wie Least-Square (Methode der kleinsten Quadrate) oder Maximum-Likelhood.

Aufgrund des bekannten Funktionszusammenhangs (2) kann nach vorliegender Erfindung die wahre Temperatur unter Zuhilfenahme der Planck'schen Gesetze für reale Körper, beschrieben durch die Gleichungen (3) und (4) oder deren Approximatimen (6) und (7), berechnet werden.

Um die Anpassung der Funktion (2) an den jeweiligen Anwendungsfall bestmöglich zu gewähren, können regelmässige Referenzmessungen vorgenommen werden, die eine Aktualisierung der Funktionsparameter mittels einem rekursiven Fehlerminimierungsverfahren erlauben.

Das oben beschriebene erfindungsgemässe Verfahren erlaubt eine wesentliche Verminderung des Einflusses der veränderlichen Emissionsgrade durch eine Störgrössenkorrektur für die pyrometrische Temperaturmessung mit Zweiwellenlängenpyrometern.

Vorliegendes Verfahren ist beispielsweise geeignet zur Messung von Oberflächentemperaturen an nicht schwarzen Körpern, bei denen die Umgebungsstrahlung gegenüber der Infrarotstrahlung des Messgutes vernachlässigbar ist.

Bevorzugt wird das Verfahren zur Messung von Oberflächentemperaturen an hochreflektierenden, metallischen Oberflächen und insbesondere an Aluminiumoberflächen verwendet.

Das erfindungsgemässe Verfahren für die Temperaturmessung mit Zweiwellenlängenpyrometern von Messgütern mit kleinem, insbesondere wellenlängenabhängigem Emissionsgrad, ist eine für die berührungslose Erfassung der Oberflächentemperaturen von Aluminium und Buntmetallen entwickelte Methode.

Wegen des ungewöhnlichen Verhaltens der Emissivität dieser Werkstoffe treten bei der berührungslosen Infrarot-Temperaturmessung normalerweise grosse Fehler auf, welche durch das erfindungsgemässe Verfahren weitgehend aufgefangen werden.

Das erfindungsgemässe Verfahren zur hochpräzisen berührungslosen Temperaturmessung ermöglicht ganz neue Dimensionen der Prozesskontrolle und findet Verwendung in der gesamten Buntmetallindustrie und zwar überall dort, wo die Verarbeitungs- oder Betriebstemperatur des Messgutes kritisch ist.

In der Aluminiumindustrie wird das erfindungsgemässe Verfahren zur Temperaturkontrolle der Schmelze beim Giessen, des Rohmaterials beim Fliesspressen sowie der Produkttemperatur beim Strangpressen und Walzen eingesetzt. Die Referenz-Temperaturmessungen können, beispielsweise beim Walzen oder Strangpressen, nach jedem Wechsel des Rohmaterials erfolgen.

Eine Gegenüberstellung von Messkurven verschiedener Temperaturmessverfahren an AlMgSi1 ist beispielhaft in Figur 2 dargestellt. Die Grafik erlaubt den Vergleich der Messkurve einer kontinuierlichen Temperaturerfassung an stranggepresstem AlMgSi1 mit verschiedenen Temperaturmessverfahren, wobei der durch das erfindungsgemässe Auswerteverfahren ermittelte Temperaturverlauf, jeweils optimiert für eine Stichprobe von Vergleichsmessungen, der Temperaturmessung mit bekannten Verfahren, wie der Temperaturbestimmung mittels Strahldichtepyrometer, Quotienten- oder Verhältnispyrometer oder Thermoelement, gegenübergestellt ist.

In Figur 2 ist die Temperatur in °C (T/°C) gegen die Zeit in Sekunden (t/s) aufgetragen.

Da Thermoelemente typischerweise eine Messgenauigkeit von etwa 1 % aufweisen und zudem eine für diesen Anwendungszweck vernachlässigbare Verzögerung der Temperaturerfassung zeigen, kann die entsprechende Messkurve als wahrer Temperaturverlauf angesehen werden.

Die Grafik in Figur 2 zeigt somit auf überraschende Weise die durch das erfindungsgemässe Verfahren erreichte Verbesserung der berührungslosen Erfassung von Oberflächentemperaturen an Körpern mit kleinem Emissionsgrad.

**Patentansprüche**

1.  Verfahren für die Temperaturmessung mit Zweiwellenlängenpyrometern von Messgütern mit kleinem Emissionsgrad ($\varepsilon < 0,1$) und veränderlichen Oberflächencharakteristiken und eine Störgrössenkorrektur der Temperaturmessung,
    dadurch gekennzeichnet, dass
    die Temperatur des Körpers $T_K$ durch die spektrale Strahldichte bei den Wellenlängen $\lambda_1$ und $\lambda_2$ mittels eines Zweiwellenlängenpyrometers erfasst wird und durch eine Korrelationsanalyse der Funktionszusammenhang

    $$\varepsilon_1 = f(\varepsilon_2) \quad \text{bzw.} \quad \varepsilon_2 = f(\varepsilon_1) \quad (2)$$

    ermittelt wird und die Temperatur des Körpers $T_K$ durch die Lösung des folgenden nichtlinearen Gleichungssystems, bestehend aus drei Gleichungen und drei Unbekannten, enthaltend den Funktionszusammenhang zwischen den Emissionsgraden $\varepsilon_1$ und $\varepsilon_2$ und die für beide Messwellenlängen gültigen Planck'schen Gleichungen für reale Strahler, bestimmt wird,

$$L_{\lambda 1} = \frac{\varepsilon_1 \, * \, C_1}{\pi * \lambda_1{}^5 * \left[e^{\frac{C_2}{\lambda_1 * T_K}} - 1\right]} \tag{3}$$

$$L_{\lambda 2} = \frac{\varepsilon_2 \, * \, C_1}{\pi * \lambda_2{}^5 * \left[e^{\frac{C_2}{\lambda_2 * T_K}} - 1\right]} \tag{4}$$

$$\varepsilon_1 = f(\varepsilon_2) \tag{5}$$

wobei im Gleichungssystem die spektralen Strahldichten $L_{\lambda 1}$ bzw. $L_{\lambda 2}$ die gemessenen physikalischen Grössen, $\lambda_1$ bzw. $\lambda_2$ die bekannten Messwellenlängen und $\varepsilon_1$ bzw. $\varepsilon_2$ die unbekannten Emissionsgrade sind, und die Konstanten $C_1$, $C_2$ und $\pi$ bekannte physikalische Grössen darstellen.

2.  Verfahren nach Anspruch 1, dadurch gekennzeichnet, dass die Gleichungen (3) und (4), durch deren Approximationen für kleine Wellenlängen

$$L_{\lambda 1} = \frac{\varepsilon_1 \, * \, C_1}{\pi * \lambda_1{}^5 * \, e^{\frac{C_2}{\lambda_1 * T_K}}} \tag{6}$$

$$L_{\lambda 2} = \frac{\varepsilon_2 \, * \, C_1}{\pi * \lambda_2{}^5 * \, e^{\frac{C_2}{\lambda_2 * T_K}}} \qquad\qquad (7)$$

ersetzt werden.

3. Verfahren nach Anspruch 1 oder 2, dadurch gekennzeichnet, dass für den Funktionszusammenhang zwischen den Emissionsgraden $\varepsilon_1$ und $\varepsilon_2$ lineare Ansätze angewendet werden.

4. Verfahren nach Anspruch 1 oder 2, dadurch gekennzeichnet, dass für den Funktionszusammenhang zwischen den Emissionsgraden $\varepsilon_1$ und $\varepsilon_2$ quadratische Ansätze angewendet werden.

5. Verfahren nach Anspruch 1 oder 2, dadurch gekennzeichnet, dass für den Funktionszusammenhang zwischen den Emissionsgraden $\varepsilon_1$ und $\varepsilon_2$ logarithmische Ansätze angewendet werden.

6. Verfahren nach den Ansprüchen 1 bis 5, dadurch gekennzeichnet, dass die Parameter des Funktionszusammenhangs zwischen den Emissionsgraden $\varepsilon_1$ und $\varepsilon_2$ durch Referenz-Temperaturmessungen ermittelt werden.

7. Verfahren nach Anspruch 6, dadurch gekennzeichnet, dass die Referenzmessungen einem Fehlerminimierungsverfahren (Least Square, Maximum-Likelhood.) unterzogen werden.

8. Verwendung des Verfahrens gemäss Anspruch 1 zur Messung von Oberflächentemperaturen an nicht schwarzen Körpern, bei denen die Umgebungsstrahlung gegenüber der Infrarotstrahlung des Messgutes vernachlässigbar ist.

9. Verwendung des Verfahrens gemäss Anspruch 1 zur Messung von Oberflächentemperaturen an metallischen Oberflächen und insbesondere an Aluminiumoberflächen.

Figur 1: Gemessene Emissionsgrade an AlMgSi1  (stranggepresst)

Figur 2: Vergleich verschiedener Temperaturmessverfahren an strang-
        gepresstem AlMgSi1

EP 0 592 361 A1

**Europäisches Patentamt**

# EUROPÄISCHER RECHERCHENBERICHT

 Nummer der Anmeldung

EP 93 81 0678

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | EP-A-0 335 224 (NIPPON STEEL)<br>* Zusammenfassung *<br>* Spalte 5, Zeile 29 - Zeile 39 *<br>* Spalte 6, Zeile 3 - Zeile 11 *<br>* Spalte 6, Zeile 20 - Spalte 7, Zeile 47 *<br>* Spalte 7, Zeile 52 - Zeile 54 *<br>* Spalte 8, Zeile 2 - Zeile 17 *<br>* Spalte 9, Zeile 21 - Zeile 27 *<br>* Spalte 11, Zeile 33 - Spalte 12, Zeile 18 *<br>* Spalte 12, Zeile 37 - Zeile 48 * | 1-4,6 | G01J5/60 |
| Y | * Abbildungen 11-13 *<br>--- | 1-3,5-9 | |
| Y | INTERNATIONAL JOURNAL OF THERMOPHYSICS<br>Bd. 11, Nr. 1 , Januar 1990 , NEW YORK<br>Seiten 269 - 281<br>B.K. TSAI ET AL. 'Dual-wavelength radiation thermometry: emissivity compensation algorithms'<br>* Zusammenfassung *<br>* Seite 271, Zeile 1 - Seite 272, Absatz 1 *<br>* Seite 274, Zeile 16 - Zeile 21 *<br>* Seite 275, Zeile 6 - Zeile 11 *<br>--- | 1-3,5-9 | |
| A | REVIEW OF SCIENTIFIC INSTRUMENTS<br>Bd. 62, Nr. 2 , Februar 1991 , NEW YORK US<br>Seiten 392 - 402<br>M.A. KHAN ET AL. 'Non-contact temperature measurement. I. Interpolation based techniques'<br>* Seite 394, linke Spalte, Absatz 1 -Absatz 4 *<br>---<br>-/-- | 1-3 | |

**RECHERCHIERTE SACHGEBIETE (Int.Cl.5)**

G01J

Der vorliegende Recherchenbericht wurde für alle Patentansprüche erstellt

| Recherchenort | Abschlußdatum der Recherche | Prüfer |
|---|---|---|
| DEN HAAG | 19. Januar 1994 | Thomas, R.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C00)

9

## EUROPÄISCHER RECHERCHENBERICHT

Europäisches
Patentamt

Nummer der Anmeldung

EP 93 81 0678

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | JOURNAL OF PHYSICS E. SCIENTIFIC INSTRUMENTS<br>Bd. 20, Nr. 6 , Juni 1987 , BRISTOL GB<br>Seiten 615 - 620<br>T.P. JONES ET AL. 'Radiation pyrometers for temperature measurement during aluminium processing'<br>* Seite 617, linke Spalte, Zeile 5 - Zeile 8; Abbildung 1 *<br>----- | 1,7-9 | |

RECHERCHIERTE
SACHGEBIETE (Int.Cl.5)

Der vorliegende Recherchenbericht wurde für alle Patentansprüche erstellt

| Recherchenort | Abschlußdatum der Recherche | Prüfer |
|---|---|---|
| DEN HAAG | 19. Januar 1994 | Thomas, R.M. |

EPO FORM 1503 03.82 (P04C03)